# FASCICULE DE BREVET EUROPEEN

(11) **EP 4 217 613 B1**
(45) Date de publication et mention de la délivrance du brevet: **31.07.2024**
(21) Numéro de dépôt: 21782773.2
(22) Date de dépôt: 04.09.2021
(51) Int. Cl.: F16B 5/06, B63H 9/08

(54) **DISPOSITIF DE CONNEXION ENTRE UNE TOILE ET UN RAIL**
VORRICHTUNG ZUR VERBINDUNG ZWISCHEN EINER LEINWAND UND EINER SCHIENE
DEVICE FOR CONNECTION BETWEEN A CANVAS AND A RAIL

(30) Priorité: 23.09.2020 FR 2009673
(43) Date de publication de la demande: 02.08.2023
(73) Titulaire: Berger, Pierre, 83310 La Mole (FR)
(72) Inventeur: Berger, Pierre, 83310 La Mole (FR)
(74) Mandataire: Flavenot, Bernard
(86) Numéro de dépôt international: PCT/FR2021/000102
(87) Numéro de publication internationale: WO 2022/064108

(56) Documents cités:
- WO-A1-2010/019692
- WO-A1-98/41446
- JP-U- S5 869 677
- US-A- 5 065 686
- US-A1- 2014 352 593

## Description

### Domaine technique

La présente invention concerne un dispositif de connexion entre une toile et un rail, qui trouve une application particulièrement avantageuse lorsque la toile est constituée par l'un des éléments suivants : un rideau d'occultation, par exemple d'une fenêtre apte à être associé à une tringle à rideau ou dans un endroit à protéger comme dans un milieu hospitalier ; une voile de bateau apte à être associée à un mât de bateau à voile, etc.

Dans les cas cités ci-dessus, la toile est apte à prendre deux positions extrêmes correspondant respectivement à un état dans lequel elle est dépliée et un état dans lequel elle est repliée. Par exemple, pour une toile constituée d'une voile de bateau, ces deux positions sont définies, par les hommes de l'art, par les terminologies suivantes : « voile montée » et « voile affalée ». Cette dernière position est celle qui précède le rangement de la voile selon différents processus, ou sa montée.

Les processus de rangement d'une voile de bateau sont fonction de nombreux paramètres : la taille de la voile, le lieu, les conditions environnementales, les conditions météorologiques, et posent des problèmes à bord des bateaux notamment par mauvais temps.

En effet, on constate que les systèmes habituels pour relier les voiles aux mâts ne permettent pas d'affaler les voiles en un pliage correct, sans une intervention manuelle, ne serait-ce que pour pouvoir les ranger directement dans un « sac à voile » ou analogue.

Ces systèmes sont très schématiquement constitués d'une pièce d'accrochage au mât, d'une autre pièce d'accrochage à la voile et d'un lien souple reliant ces deux pièces. Un tel système est par exemple décrit dans le US 5 065 686, mais ce système ne permet pas un pliage de la voile de façon correcte, notamment symétrique et avec une moindre épaisseur pour faciliter son rangement, par exemple dans un sac ou analogue.

Le problème exposé ci-dessus pour le rangement des voiles de bateau se pose de la même façon pour les rideaux de toile ou analogue associés aux ouvertures d'une pièce d'habitation, fenêtres ou portes. Un rideau peut, lui aussi, être en position dépliée (rideau fermé) ou en position repliée (rideau ouvert), et il est préférable qu'il soit replié le mieux possible, par exemple en accordéon, ne serait-ce que dans un but esthétique.

Aussi, la présente invention a-t-elle pour but de proposer un dispositif de connexion entre une toile et un rail, qui permet de réaliser un pliage correct et automatique lors, par exemple, de l'affalement d'une voile de bateau ou de l'ouverture d'un rideau. Plus précisément, la présente invention a pour objet un dispositif de connexion entre une toile et un rail, tel que défini dans la revendication 1 annexée.

D'autres caractéristiques et avantages de la présente invention apparaîtront au cours de la description suivante donnée en regard des dessins annexés à titre illustratif, mais nullement limitatif, dans lesquels :
[Fig. 1] La figure 1 représente une vue en coupe d'un schéma de principe du dispositif de connexion selon l'invention entre une toile et un rail,
[Fig. 2] La figure 2 représente une vue en coupe d'un mode de réalisation industriel du dispositif selon l'invention, en accord avec l'illustration selon la figure 1,
[Fig. 3] La figure 3 représente, en perspective cavalière, une partie du dispositif selon l'invention en accord avec le mode de réalisation illustré sur la figure 2,
[Fig. 4] La figure 4 représente une vue de côté du dispositif selon l'invention en accord avec le même mode de réalisation, dans une configuration possible dite « de repos »,
[Fig. 5] La figure 5 représente une vue du même côté que pour la figure 4, du dispositif selon l'invention en accord avec le même mode de réalisation, mais dans une autre configuration possible dite « active ».
[Fig. 6] La figure 6 représente, en perspective cavalière, un mode de réalisation d'un élément constitutif du dispositif selon l'invention, à savoir un moyen amortisseur.

Il est tout d'abord précisé que, sur les figures, les mêmes références désignent les mêmes éléments, quelle que soit la figure sur laquelle elles apparaissent et quelle que soit la forme de représentation de ces éléments.

De même, si des éléments ne sont pas spécifiquement référencés sur l'une des figures, leurs références peuvent être aisément retrouvées en se reportant à une autre figure.

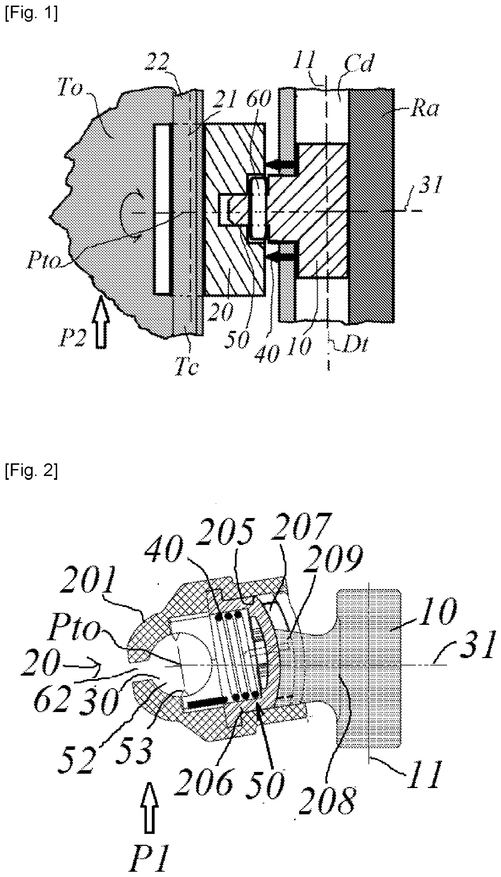

Il est aussi précisé que les figures 2-6 représentent un mode de réalisation industriel de l'objet selon l'invention, mais qu'il peut exister d'autres modes de réalisation qui répondent à la définition de cette invention.

La figure 1 est un schéma de principe de l'objet de l'invention, qui concerne un dispositif de connexion entre une toile To et un rail Ra dans lequel est réalisé un chemin de déplacement Cd selon une direction de translation Dt.

Ce chemin de déplacement peut être constitué de différentes façons, par exemple d'une rainure ou goulotte ouverte débouchant latéralement réalisée dans un montant formant un rail.

Par toile, il est compris principalement, mais non exclusivement, une voile de bateau ou un rideau d'occultation de tout type pour ouverture de pièce habitable, une fenêtre ou une porte ou analogue comme précisé ci-avant.

Le dispositif est apte à translater, sensiblement parallèlement à la direction de translation Dt, au moins un point Pto de la toile To.

Ce dispositif comprend une première pièce 10 définissant un axe longitudinal 11. Cette première pièce 10 est avantageusement cylindrique optionnellement de révolution quand le chemin de déplacement Cd selon la direction de translation Dt est constitué par une goulotte ou analogue, de façon que cette première pièce 10 puisse se déplacer par glissement dans cette roulotte.

Il est cependant précisé que ce chemin de déplacement avec goulotte est un mode de réalisation préférentiel, mais qu'il peut être prévu un autre mode de réalisation où le chemin de déplacement est un câble ou analogue le long duquel sera apte à se déplacer la première pièce 10.

Cette première pièce est donc apte à être montée en coopération de déplacement avec le rail Ra sur le chemin de déplacement Cd selon la direction de translation Dt, de façon que l'axe longitudinal 11 soit sensiblement parallèle à cette direction de translation Dt.

Le dispositif comprend une seconde pièce 20 et des moyens 30 (figure 2), dits « premiers moyens », pour solidariser cette seconde pièce 20 avec le point Pto sur un segment sensiblement de droite 21 de longueur non nulle de la toile To, ce segment de droite passant par ce point en définissant une direction de maintien 22 de la toile To.

Il comporte aussi des moyens 50, dits « deuxièmes moyens », pour monter la seconde pièce 20 en rotation par rapport à la première pièce 10 autour d'au moins un axe de rotation 31 faisant avec l'axe longitudinal 11 un premier angle de valeur non nulle et de façon que la seconde pièce 20 soit apte à prendre toutes positions entre une première position P1 et une seconde position P2.

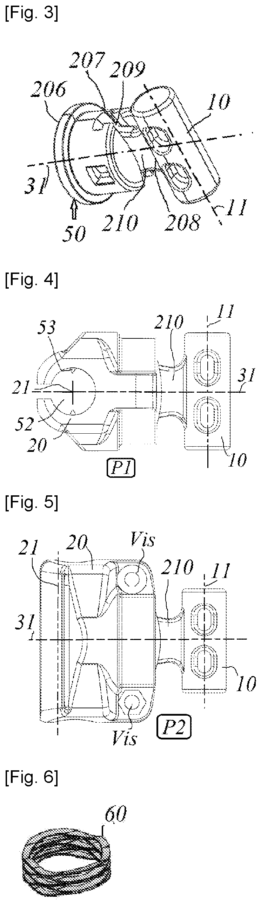

La première position P1 (figures 2 et 4) est définie de façon que la direction de maintien 22 de la toile fasse, avec l'axe longitudinal 11, un angle de valeur non nulle dit « second angle ».

Quant à la seconde position P2 (figures 1 et 5), elle est définie de façon que la direction de maintien 22 de la toile To soit sensiblement parallèle à l'axe longitudinal 11.

Les « premiers moyens » pour solidariser la seconde pièce 20 avec le point Pto sur un segment sensiblement de droite 21 de longueur non nulle de la toile, peuvent être réalisés de nombreuses façons. Dans le cas d'une voile de bateau, ces premiers moyens sont avantageusement constitués, par exemple, d'une tige cylindrique semi-rigide Tc, du genre dit « nerf de boeuf » ou analogue, qui est liée solidairement avec le bord de la voile, et d'une gorge cylindrique 52 réalisée dans la seconde pièce 20 et partiellement ouverte latéralement pour laisser passer la voile quand la tige TC est dans la gorge 52, figures 1, 2, 4.

Dans cette gorge 52, dont la longueur est égale à la longueur du segment de droite 21 sur lequel doit être maintenue la toile To, est logée la tige cylindrique semi-rigide et cette dernière y est maintenue par des picots 53 qui peuvent pénétrer et s'ancrer dans la tige Tc de façon que cette tige ne glisse pas dans la gorge 52 et qu'elle soit solidaire de la seconde pièce 20. L'association de la voile avec cette seconde pièce 20 est facilitée par une réalisation particulière de cette dernière qui sera décrite ci-après, notamment sa réalisation en deux parties aptes à être solidarisées entre elles pour sa formation.

Selon une caractéristique très préférentielle de l'invention, le dispositif comporte en outre des moyens de contrainte élastique dits « troisième moyens » montés en coopération entre la première pièce 10 et la seconde pièce 20, schématiquement illustrés sur la figure 1 et selon une réalisation industrielle sur la figure 2, de façon à tendre à ramener la seconde pièce dans sa première position P1 lorsqu'elle a été contrainte de prendre une position différente de cette première position sous l'effet d'une force de contrainte extérieure.

Selon une réalisation avantageuse, ces troisièmes moyens sont constitués par un ressort 40 dont une extrémité est solidaire de l'une des première et seconde pièces 10, 20 et l'autre extrémité solidaire de l'autre pièce 20, 10. Ce ressort 40 est monté de façon qu'il ne soit pas contraint quand la seconde pièce 20 est dans sa première position P1 et contraint (ou, selon l'expressions habituelle, « bandé ») quand la seconde pièce 20 est dans sa seconde position P2.

Ce ressort 40 est avantageusement constitué par un ressort à double torsion pour des raisons de fabrication. Un ressort à double torsion est constitué de spires enroulées en double hélice avantageusement à spires jointives. Il permet à une pièce en rotation de reprendre sa position d'origine dès qu'il n'y a plus d'effort. Son avantage, par rapport au ressort simple torsion, est constitué par le fait qu'il est plus facile à guider, et surtout, qu'il peut être retourné pour agir selon des rotations dextrorsum et senestrorsum entre les deux pièces 10 et 20.

Selon une réalisation préférée, le premier angle de valeur non nulle est au plus égal, et même de préférence égal, à quatre-vingt-dix degrés, de même que le second angle de valeur non nulle.

Selon une autre réalisation avantageuse du dispositif, les deuxièmes moyens pour monter la seconde pièce 20 en rotation par rapport à la première pièce 10 sont constitués par une rotule 50 à au moins deux degrés de liberté, un degré selon l'axe de rotation 31 défini ci-avant et un autre selon une direction perpendiculaire à cet axe 31.

Une telle rotule 50, comme illustré sur les figures 2 et 3, est essentiellement constituée par un logement cylindrique de révolution 205 réalisé dans la seconde pièce 20, par une tête de rotule 206 montée rotative et en rétention dans le logement cylindrique de révolution 205, cette tête de rotule 206 comportant une partie femelle 207 pour un emboîtement glissant sensiblement linéairement selon une direction faisant un angle non nul par rapport à l'axe de rotation 31, cette partie femelle 207 étant constituée, de façon connue en elle-même, par une tranchée ouverte bordée par un épaulement de retenue.

Quant à la partie mâle 209 de l'emboîtement glissant, elle est constituée par une première extrémité 209 d'une patte 210 dont la seconde extrémité 208 est solidaire de la première pièce 10, la première extrémité 209 de cette patte 210 étant montée en coopération par glissement dans la partie femelle 207.

De préférence, le dispositif comporte en outre des moyens amortisseurs 60 interposés entre la première pièce 10 et la seconde pièce 20 (illustrés de façon schématique sur la figure 1), surtout dans son application aux voiles de bateaux. De tels moyens amortisseurs sont avantageusement constitués par un ressort ondulé de compression à fils plats dit SMALLEY^{®}, figure 6, ce ressort ondulé étant disposé de façon sensiblement coaxiale à l'axe de rotation 31.

De façon avantageuse, la seconde pièce 20 est réalisée en au moins deux parties 201, 202 pouvant être assemblées et solidarisées entre elles par tous moyens, clipsage, vissage (Vis-figure 5), cerclage, etc., pour faciliter le montage entre cette seconde pièce et la première pièce 10 et son association avec le bord de la voile comme explicité ci-avant.

Un mode d'utilisation et de fonctionnement du dispositif, dont un mode de réalisation possible a été décrit ci-dessus, sont les suivants, en précisant que leur description sera donnée plus particulièrement dans le cas d'une application à une voile de bateau.

On suppose qu'il y a, à la disposition de l'utilisateur du bateau, une quantité déterminée de dispositifs selon l'invention.

Ces dispositifs se trouvent rassemblés dans deux ensembles différents, chaque ensemble comportant un nombre, par exemple, sensiblement égal de dispositifs à l'unité près.

Ces deux ensembles comportent chacun des dispositifs dont les positions P2 de la seconde pièce 20 par rapport à la première pièce 10 s'obtiennent respectivement par des rotations en sens inverses, à savoir des rotations dextrorsum et senestrorsum.

Ainsi, pour la facilité de l'exposé qui va suivre, les dispositifs d'un ensemble seront qualifiés de « dispositifs-dextrorsum », et les dispositifs de l'autre ensemble de « dispositifs-senestrorsum ».

L'utilisateur du bateau installe tout d'abord, sur le mât d'une voile de son bateau, alternativement des dispositifs-senestrorsum et des dispositifs-dextrorsum, par leur première pièce 10. Les premières pièces 10 sont glissées, par exemple, dans une rainure du mât (comme illustré sur la figure 1), ce qui est la réalisation la plus courante.

Puis, il associe le bord de cette voile, celui qui doit longer le mât, à la seconde pièce de chaque dispositif, par exemple comme décrit ci-avant, en des points Pto du bord de la voile séparés les uns des autres par exemple d'une même distance déterminée à la volonté du navigateur.

Par exemple cette distance est choisie pour que, lorsque la voile est affalée, sa largeur d'encombrement soit égale à une valeur 2X, par exemple pour permettre de la ranger dans un sac d'une largeur d'au moins 2X. Dans ce cas cette distance sera choisie égale à 2X.

Dans cette configuration, la voile est affalée et les secondes pièces 20 de tous les dispositifs se trouvent dans la configuration P1, à savoir « ressort 40 non contraint ». La voile est donc repliée en accordéon et présente des plis en opposition, chacun d'une profondeur égale à X.

Pour naviguer, l'utilisateur va, selon l'expression bien connue, monter la voile, en tirant sur son sommet à partir par exemple du haut du mât, via un palan ou analogue, de type manuel ou électrique.

Sous l'action de cette force de traction, la voile va se déplier et, en se dépliant, faire à la fois glisser les premières pièces 10 des dispositifs le long du mât dans la rainure et faire passer les secondes pièces 20 en seconde position P2 à l'encontre des ressorts 40 (figures 1 et 5), c'est-à-dire celle qui contraint les ressorts et donc celle où les segments de droite 21 sont sensiblement parallèles à la direction 11, figure 5. La voile montée, l'utilisateur peut naviguer comme habituellement.

Quand il ne veut plus utiliser cette voile, il affale. Les ressorts 40, libérés de la traction exercée par la voile montée, vont revenir automatiquement à leur état de repos, c'est-à-dire non contraints, et faire repasser automatiquement toutes les secondes pièces 20 dans leur configuration P1, tournant alternativement dans les sens senestrorsum et dextrorsum selon l'exemple pris pour cette description des fonctionnement et utilisation.

Ceci a pour effet de plier parfaitement la voile en accordéon selon une largeur égale hors-tout à 2X, tous les plis étant en opposition et de profondeur identiques, automatiquement, sans manipulations supplémentaires.

Le mode d'utilisation décrit ci-dessus n'est qu'un exemple donné à titre illustratif, d'autres modes sont possibles.

L'utilisation et le fonctionnement du dispositif selon l'invention dans son application à un rideau de tout type, se déduisent aisément mutatis-mutandis de mode décrit ci-dessus. Certains termes doivent simplement être changés : voile par rideau, mât par tringle, voile montée par rideau fermé ou tiré, voile affalée par rideau ouvert, voile rangée par rideau replié sur un des côtés de l'ouverture (ou analogue) pour la libérer.

A la lumière des descriptions, structurelle et fonctionnelle, faites ci-dessus, il est apparent que les buts de l'invention sont bien atteints, avec des dispositifs selon l'invention qui sont en outre d'une structure très simple, peu onéreux et qui répondent à la grande satisfaction, notamment, des navigateurs en bateau à voile.

## Revendications

1. Dispositif de connexion entre une toile (To) et un rail (Ra) dans lequel est réalisé un chemin de déplacement (Cd) selon une direction de translation (Dt), ledit dispositif étant apte à translater, sensiblement parallèlement à la direction de translation, au moins un point de cette toile (Pto), comprenant :
• une première pièce (10) définissant un axe longitudinal (11) et apte à être montée en coopération de déplacement avec le rail (Ra) sur ledit chemin de déplacement (Cd) selon ladite direction de translation (Dt), de façon que ledit axe longitudinal (11) soit sensiblement parallèle à ladite direction de translation (Dt),
• une seconde pièce (20),
• des moyens (30), dits « premiers moyens », pour solidariser cette dite seconde pièce (20) avec le point (Pto) sur un segment sensiblement de droite (21) de longueur non nulle, ce dit segment de droite passant par ce dit point en définissant une direction de maintien (22) de la toile (To), et
• des moyens (50), dits « deuxièmes moyens », pour monter ladite seconde pièce (20) en rotation par rapport à la première pièce (10) autour d'au moins un axe de rotation (31), ledit axe de rotation faisant avec l'axe longitudinal (11) un premier angle de valeur non nulle, de façon que ladite seconde pièce (20) soit apte à prendre toutes positions entre une première position (P1) et une seconde position (P2),
• la première position (P1) étant définie de façon que la direction de maintien (22) de la toile fasse, avec l'axe longitudinal (11) un second angle de valeur non nulle et
• la seconde position (P2) étant définie de façon que ladite direction de maintien (22) de la toile (To) soit sensiblement parallèle à l'axe longitudinal (11),
**caractérisé par le fait qu'**il comporte en outre des moyens de contrainte élastique dits « troisième moyens » montés en coopération entre la première pièce (10) et la seconde pièce (20) de façon à tendre à ramener ladite seconde pièce dans sa première position (P1) lorsqu'elle a été contrainte de prendre une position différente de cette première position sous l'effet d'une force de contrainte extérieure.

2. Dispositif selon la revendication 1, **caractérisé par le fait que** lesdits troisièmes moyens sont constitués par un ressort (40) dont une extrémité est solidaire de l'une des première et seconde pièces (10, 20) et l'autre extrémité solidaire de l'autre pièce (20, 10), ce dit ressort (40) étant monté de façon qu'il ne soit pas contraint quand la seconde pièce (20) est dans sa première position (P1) et contraint quand ladite seconde pièce (20) est dans sa seconde position (P2).

3. Dispositif selon la revendication 2, **caractérisé par le fait que** ledit ressort (40) est un ressort à double torsion.

4. Dispositif selon l'une des revendications précédentes, **caractérisé par le fait que** ledit premier angle de valeur non nulle est au plus égal à quatre-vingt-dix degrés et que ledit second angle de valeur non nulle est sensiblement égal à quatre-vingt-dix degrés.

5. Dispositif selon l'une des revendications précédentes, **caractérisé par le fait que** les deuxièmes moyens (50) pour monter la seconde pièce (20) en rotation par rapport à la première pièce (10) sont constitués par une rotule (50) à au moins deux degrés de liberté.

6. Dispositif selon la revendication 5, **caractérisé par le fait que** ladite rotule (50) à deux degrés de liberté est constituée par :
• un logement cylindrique de révolution (205) réalisé dans ladite seconde pièce (20),
• une tête de rotule (206) montée rotative en rétention dans ledit logement cylindrique de révolution (205), ladite tête de rotule comportant une partie femelle (207) d'un emboîtement glissant sensiblement linéairement selon une direction faisant un angle non nul par rapport à l'axe de rotation (31), ledit emboîtement étant constitué de deux parties, respectivement ladite partie femelle (207) et une partie mâle (209),
• la partie mâle (209) de l'emboîtement étant constituée par une première extrémité d'une patte (210) dont la seconde extrémité (208) est solidaire de ladite première pièce (10), la première extrémité (209) conformée en partie mâle étant montée en coopération par glissement avec la partie femelle (207) dudit emboîtement.

7. Dispositif selon l'une des revendications précédentes, **caractérisé par le fait que** ladite toile (To) est constituée par l'un des deux éléments suivants :
• un rideau d'occultation apte à être associé à une tringle à rideau,
• une voile de bateau apte à être associée à un mât de bateau à voile.

8. Dispositif selon l'une des revendications précédentes, **caractérisé par le fait qu'**il comporte des moyens amortisseurs (60) interposés entre la première pièce (10) et la seconde pièce (20).

9. Dispositif selon l'une des revendications précédentes, **caractérisé par le fait que** ladite première pièce (10) est sensiblement cylindrique optionnellement de révolution.

## Patentansprüche

1. Vorrichtung zur Verbindung zwischen einem Tuch (To) und einer Schiene (Ra), bei der ein Verschiebungsweg (Cd) in einer Translationsrichtung (Dt) erreicht wird, wobei die Vorrichtung in der Lage ist, mindestens eine Stelle dieses Tuches (Pto) im Wesentlichen parallel zur Translationsrichtung zu verschieben, umfassend:
- ein erstes Teil (10), das eine Längsachse (11) definiert und geeignet ist, mit der Schiene (Ra) auf dem Verschiebungsweg (Cd) in der Translationsrichtung (Dt) beweglich montiert zu werden, so dass die Längsachse (11) im Wesentlichen parallel zur Translationsrichtung (Dt) verläuft,
- ein zweites Teil (20),
- Mittel (30), "erste Mittel" genannt, um das zweite Teil (20) an der Stelle (Pto) auf einem im Wesentlichen geraden Abschnitt (21) mit einer Länge ungleich Null zu sichern, wobei dieser gerade Abschnitt durch diese Stelle verläuft und eine Halterichtung (22) für das Tuch (To) definiert, und
- Mittel (50), "zweite Mittel" genannt, um das zweite Teil (20) in Bezug auf das erste Teil (10) um mindestens eine Drehachse (31) drehbar zu montieren, wobei die Drehachse mit der Längsachse (11) einen ersten Winkel ungleich Null bildet, so dass das zweite Teil (20) alle Positionen zwischen einer ersten Position (P1) und einer zweiten Position (P2) einnehmen kann,
* wobei die erste Position (P1) so definiert ist, dass die Halterichtung (22) für das Tuch mit der Längsachse (11) einen zweiten Winkel ungleich Null bildet, und
* wobei die zweite Position (P2) so definiert ist, dass die Halterichtung (22) für das Tuch (To) im Wesentlichen parallel zur Längsachse (11) verläuft,
**dadurch gekennzeichnet, dass** sie ferner elastische Zurückhaltungsmittel, "dritte Mittel" genannt, umfasst, die zwischen dem ersten Teil (10) und dem zweiten Teil (20) so angebracht sind, dass sie dazu dienen, das zweite Teil in seine erste Position (P1) zurückzubringen, wenn es beansprucht wurde, unter der Wirkung einer äußeren Belastungskraft eine von dieser ersten Position abweichende Position einzunehmen.

2. Vorrichtung nach Anspruch 1, **dadurch gekennzeichnet, dass** die dritten Mittel von einer Feder (40) gebildet sind, deren eines Ende mit einem der beiden Teile (10, 20) und deren anderes Ende an dem anderen Teil (20, 10) befestigt ist, wobei die Feder (40) so angeordnet ist, dass sie nicht vorgespannt ist, wenn sich das zweite Teil (20) in seiner ersten Position (P1) befindet, und vorgespannt ist, wenn sich das zweite Teil (20) in seiner zweiten Position (P2) befindet.

3. Vorrichtung nach Anspruch 2, **dadurch gekennzeichnet, dass** die Feder (40) eine Doppel-Torsionsfeder ist.

4. Vorrichtung nach einem der vorhergehenden Ansprüche, **dadurch gekennzeichnet, dass** der erste Winkel mit einem Wert ungleich Null höchstens gleich neunzig Grad ist und dass der zweite Winkel mit einem Wert ungleich Null im Wesentlichen gleich neunzig Grad ist.

5. Vorrichtung nach einem der vorhergehenden Ansprüche, **dadurch gekennzeichnet, dass** die zweiten Mittel (50) zur drehbaren Befestigung des zweiten Teils (20) in Bezug auf den ersten Teil (10) von einer Kugel (50) mit mindestens zwei Freiheitsgraden gebildet werden.

6. Vorrichtung nach Anspruch 5, **dadurch gekennzeichnet, dass** die Kugel (50) mit zwei Freiheitsgraden gebildet wird durch:
- ein zylindrisches Drehgehäuse (205), das in dem zweiten Teil (20) ausgebildet ist,
- einen Kugelkopf (206), der drehbar in dem zylindrischen Drehgehäuse (205) gehalten wird, wobei der Kugelkopf einen weiblichen Teil (207) einer Verklammerung umfasst, die im Wesentlichen linear in einer Richtung verschoben wird, die einen von Null verschiedenen Winkel in Bezug auf die Rotationsachse (31) bildet, wobei die Verklammerung zwei Teile, den weiblichen Teil (207) und einen männlichen Teil (209), umfasst,
- wobei der männliche Teil (209) der Verklammerung durch ein erstes Ende einer Stütze (210) gebildet wird, deren zweites Ende (208) fest mit dem ersten Teil (10) verbunden ist, wobei das erste Ende (209), das in dem männlichen Teil geformt ist, durch Verschieben mit dem weiblichen Teil (207) der Verklammerung in Eingriff gebracht wird.

7. Vorrichtung nach einem der vorhergehenden Ansprüche, **dadurch gekennzeichnet, dass** das Tuch (To) aus einem der beiden folgenden Elemente gebildet ist:
- einem Verdunkelungsvorhang, der mit einer Vorhangstange verbunden werden kann,
- einem Bootssegel, das mit einem Segelbootmast verbunden werden kann.

8. Vorrichtung nach einem der vorhergehenden Ansprüche, **dadurch gekennzeichnet, dass** sie Dämpfungsmittel (60) umfasst, die zwischen dem ersten Teil (10) und dem zweiten Teil (20) angeordnet sind.

9. Vorrichtung nach einem der vorhergehenden Ansprüche, **dadurch gekennzeichnet, dass** der erste Teil (10) im Wesentlichen zylindrisch wahlweise rotationszylindrisch ist.

## Claims

1. Device for connection between a canvas (To) and a rail (Ra), wherein a movement path (Cd) in a translation direction (Dt) is achieved, said device being capable of translating, substantially parallel to the translation direction, at least one point of this canvas (Pto), comprising:
• a first part (10) defining a longitudinal axis (11) and capable of being mounted engaged moving with the rail (Ra) on said movement path (Cd) in said translation direction (Dt), such that said longitudinal axis (11) is substantially parallel to said translation direction (Dt),
• a second part (20),
• means (30), called "first means", for securing this said second part (20) to the point (Pto) on a substantially straight segment (21) of non-zero length, this said straight segment passing through this said point defining a holding direction (22) for the canvas (To), and
• means (50), called "second means", for rotatably mounting said second part (20) with respect to the first part (10) about at least one axis of rotation (31), said axis of rotation forming with the longitudinal axis (11), a first angle of non-zero value, such that said second part (20) is capable of taking all positions between a first position (P1) and a second position (P2),
• the first position (P1) being defined such that the holding direction (22) for the canvas makes, with the longitudinal axis (11), a second angle of non-zero value, and
• the second position (P2) being defined such that said holding direction (22) for the canvas (To) is substantially parallel to the longitudinal axis (11),
**characterised in that** it further comprises resilient constraint means called "third means", mounted engaged between the first part (10) and the second part (20) so as to tend to return said second part into its first position (P1) when it has been constrained to take a position different from this first position under the effect of an external constraint force.

2. Device according to claim 1, **characterised in that** said third means are constituted by a spring (40), an end of which is secured to one of the first and second parts (10, 20) and the other end secured to the other part (20, 10), this said spring (40) being mounted such that it is not constrained when the second part (20) is in its first position (P1) and constrained when said second part (20) is in its second position (P2).

3. Device according to claim 2, **characterised in that** said spring (40) is a double twist spring.

4. Device according to any one of the preceding claims, **characterised in that** said first angle of non-zero value is at most equal to ninety degrees and that said second angle of non-zero value is substantially equal to ninety degrees.

5. Device according to any one of the preceding claims, **characterised in that** the second means (50) for rotatably mounting the second part (20) with respect to the first part (10) are constituted by a ball (50) at at least two degrees of freedom.

6. Device according to claim 5, **characterised in that** said ball (50) with two degrees of freedom is constituted by:
• a cylindrical housing of revolution (205) made in said second part (20),
• a ball head (206) rotatably mounted retained in said cylindrical housing of revolution (205), said ball head comprising a female part (207) of a nesting sliding substantially linearly in a direction forming a non-zero angle with respect to the axis of rotation (31), said nesting being constituted of two parts, respectively said female part (207) and a male part (209),
• the male part (209) of the nesting being constituted by a first end of a tab (210), the second end (208) of which is secured to said first part (10), the first end (209) shaped in the male part being mounted engaged by sliding with the female part (207) of said nesting.

7. Device according to any one of the preceding claims, **characterised in that** said canvas (To) is constituted by one of the two following elements:
• a blackout curtain capable of being associated with a curtain rod,
• a boat sail capable of being associated with a sailboat mast.

8. Device according to any one of the preceding claims, **characterised in that** it comprises damping means (60) interposed between the first part (10) and the second part (20).

9. Device according to any one of the preceding claims, **characterised in that** said first part (10) is substantially optionally cylindrical of revolution.
